# EUROPÄISCHE PATENTANMELDUNG

(11) **EP 4 550 614 A1**
(43) Veröffentlichungstag der Anmeldung: **07.05.2025**
(21) Anmeldenummer: 24207957.2
(22) Anmeldetag: 22.10.2024
(51) Int. Cl.: H02J 7/00, B60L 58/16

(54) **BATTERIE-AUFLADEVORRICHTUNG FÜR ELEKTRISCH BETRIEBENE FLURFÖRDERZEUGE**

(30) Priorität: 02.11.2023 DE 102023130306
(71) Anmelder: STILL GmbH, 22113 Hamburg (DE); Linde Material Handling GmbH, 63743 Aschaffenburg (DE)
(72) Erfinder: Götzinger, Jonathan, 63322 Rödermark (DE); Wilken, Hauke, 22159 Hamburg (DE); Sippel, Heiko, 63741 Aschaffenburg (DE)
(74) Vertreter: Patentship Patentanwaltgesellschaft

(57) **Zusammenfassung**

Die Erfindung betrifft eine Aufladevorrichtung (120a) zum Aufladen einer aufladbaren Batterie (135a) eines Flurförderzeugs (130a,b). Die Aufladevorrichtung (120a) umfasst eine Ladeschnittstelle (124a), insbesondere ein Ladestecker (124a), welche ausgebildet ist, mit einer entsprechenden Ladeschnittstelle (133a) des Flurförderzeugs (130a,b) mechanisch und elektrisch verbunden zu werden, um während eines Ladevorgangs die Batterie (135a) des Flurförderzeugs (130a,b) mit einem Ladestrom und/oder einer Ladespannung zu beaufschlagen. Ferner umfasst die Aufladevorrichtung (120a) eine Sensoreinheit (122a), welche ausgebildet ist, während des Ladevorgangs Daten der Batterie (135a) des Flurförderzeugs (130a,b) zu erfassen, auf deren Grundlage ein Alterungszustand der Batterie (135a) des Flurförderzeugs (130a-d) bestimmbar ist. Die Sensoreinheit (122a) kann ferner ausgebildet sein, den Alterungszustand der Batterie (135a) auf der Grundlage der von der Sensoreinheit (122a) während des Ladevorgangs erfassten Daten der Batterie (135a) zu bestimmen.

## Beschreibung

Die Erfindung betrifft eine Batterie-Aufladevorrichtung für elektrisch betriebene, d.h. Batterie betriebene Flurförderzeuge, insbesondere Gabelstapler, und ein Verfahren zum Betreiben einer solchen Aufladevorrichtung sowie ein System mit einer Vielzahl solcher Aufladevorrichtungen.

Für den Transport und die Lagerung von Produkten, Waren und Materialien werden oftmals Ladungsträger, beispielsweise Gitterboxen oder Paletten, insbesondere Europaletten verwendet. Zur Handhabung derartige Ladungsträger z.B. in der Intralogistik, d.h. dem innerbetrieblichen Materialfluss, z.B. in einem Warenlager, werden häufig Flurförderzeuge, z.B. Gabelstapler, Industrieroboter und dergleichen eingesetzt, die zumindest teilweise automatisiert sein können. Derartige Flurförderzeuge werden immer mehr durch elektrische Batterien (auch als Akkumulatoren bezeichnet) angetrieben, die an Aufladevorrichtungen (auch als Ladestationen oder Ladegeräte bekannt) wieder elektrisch aufgeladen werden können. Dabei sind für den Antrieb der Flurförderzeuge in der Vergangenheit hauptsächlich Bleibatterien und in letzter Zeit vermehrt Lithiumbatterien zum Einsatz gekommen.

Beim Altern verändern Batterien, insbesondere Lithiumbatterien, aber auch Batterien auf Basis anderer Zellchemie (beispielsweise Bleibatterien oder Batterien auf der Basis von Natrium-Ionen) ihre elektrochemischen Eigenschaften. Dadurch kann sich insbesondere der Innenwiderstand, d.h. die Impedanz und die Frequenzabhängigkeit, d.h. der Frequenzverlauf des Innenwiderstands einer Batterie verändern und die Kapazität der Batterie abnehmen. Dabei ist der Alterungszustand einer Batterie, der im Englischen auch als "State of Health" (SoH) bezeichnet wird, ein wichtiges Kriterium, um Aussagen über eine Batterie machen zu können, insbesondere um die verbleibende Lebensdauer und die Restkapazität der Batterie zu bestimmen.

Der vorliegenden Erfindung liegt die Aufgabe zugrunde, eine verbesserte Batterie-Aufladevorrichtung für elektrisch betriebene, d.h. Batterie betriebene Flurförderzeuge, insbesondere Gabelstapler, und ein Verfahren zum Betreiben einer solchen Aufladevorrichtung sowie ein System mit einer Vielzahl solcher Aufladevorrichtungen bereitzustellen.

Diese Aufgabe wird gemäß einem ersten Aspekt der Erfindung durch eine Aufladevorrichtung zum Aufladen einer Antriebsbatterie eines Flurförderzeugs, insbesondere eines Gabelstaplers, gelöst. Die Aufladevorrichtung umfasst eine Ladeschnittstelle, welche ausgebildet ist, bei einem Ladevorgang mechanisch und elektrisch mit einer komplementär ausgebildeten Ladeschnittstelle des Flurförderzeugs verbunden zu werden, um die Batterie des Flurförderzeugs mit einem Ladestrom und/oder einer Ladespannung zu beaufschlagen und die Batterie somit aufzuladen. Ferner umfasst die Aufladevorrichtung eine Sensoreinheit (hierin auch als Erfassungseinheit bezeichnet), welche ausgebildet ist, während eines Ladevorgangs Daten zu erfassen, auf deren Grundlage der Alterungszustand der Batterie des Flurförderzeugs bestimmbar ist. Die Daten können beispielsweise Zeitsignale oder Frequenzsignale einer physikalischen Eigenschaft, insbesondere der Impedanz der Batterie umfassen. Unter Zeitsignalen werden hierin Signale als Funktion der Zeit und unter Frequenzsignalen Signale als Funktion der Frequenz verstanden. Dabei kann es sich um diskrete und/oder quantisierte Signale handeln.

Die erfindungsgemäße Aufladevorrichtung erlaubt es, ggf. ohnehin vorhandene Ladegeräte um die Funktion der Bestimmung des Alterungszustands einer Batterie zu erweitern, also eine Bestimmung des Alterungszustands ohne zusätzliche Vorrichtungen und im regulären Einsatz eines Flurförderzeugs.

Gemäß einer Ausführungsform ist die Sensoreinheit der Aufladevorrichtung selbst ausgebildet, den Alterungszustand der Batterie auf der Grundlage der von der Sensoreinheit während des Ladevorgangs erfassten Daten der Batterie zu bestimmen.

In einer Ausführungsform kann die Sensoreinheit der Aufladevorrichtung ausgebildet sein, den Alterungszustand der Batterie auf der Grundlage der von der Sensoreinheit während des Ladevorgangs erfassten Daten der Batterie mittels eines in der Sensoreinheit hinterlegten formelmäßigen Zusammenhangs und/oder mittels eines von der Sensoreinheit implementierten KI-Modells, insbesondere künstlichen neuronalen Netzwerkes zu bestimmen.

Gemäß einer weiteren Ausführungsform kann die Aufladevorrichtung eine Kommunikationsschnittstelle aufweisen, welche ausgebildet ist, die von der Sensoreinheit während des Ladevorgangs erfassten Daten der Batterie an eine zentrale Managementvorrichtung, beispielsweise an einen lokalen Industrie-PC oder einen Cloud-Server, zum Bestimmen des Alterungszustand der Batterie zu senden und/oder den von der Sensoreinheit bestimmten Alterungszustand der Batterie an die zentrale Managementvorrichtung zu senden.

In einer Ausführungsform kann die Aufladevorrichtung ferner eine Steuereinheit aufweisen, welche ausgebildet ist, während des Ladevorgangs der Batterie den Ladestrom und/oder die Ladespannung so zu variieren, dass eine Impulsantwort und/oder Sprungantwort einer physikalischen Größe der Batterie angeregt wird, welche von der Sensoreinheit als die Daten der Batterie oder als Teil davon erfasst wird, auf deren Grundlage der Alterungszustand der Batterie bestimmbar ist.

Gemäß einer Ausführungsform ist die Sensoreinheit ausgebildet, eine Impulsantwort und/oder Sprungantwort der Impedanz der Batterie als die Daten der Batterie oder als Teil davon zu erfassen, auf deren Grundlage der Alterungszustand der Batterie bestimmbar ist.

In einer Ausführungsform kann für die Erfassung der Daten der Batterie des Flurförderzeugs zur Bestimmung des Alterungszustand der Batterie die Aufladevorrichtung ausgebildet sein, die Batterie vor dem Ladevorgang zu entladen, vorzugsweise vollständig zu entladen. Mit anderen Worten: in einer Ausführungsform ist die Aufladevorrichtung als bidirektionale Aufladevorrichtung, d.h. als Auf- und Entladevorrichtung ausgebildet.

Gemäß einer Ausführungsform ist die Sensoreinheit der Aufladevorrichtung ausgebildet, den Alterungszustand der Batterie auf der Grundlage der von der Sensoreinheit während des Ladevorgangs erfassten Daten der Batterie zu bestimmen, indem das Verhältnis zwischen der auf die entladene Batterie geladene elektrische Gesamtenergie und einer spezifikationsgemäßen Energiekapazität der Batterie bestimmt wird.

In einer Ausführungsform umfasst die Batterie des Flurförderzeugs ein Batterie-Management-System, BMS, und die von der Sensoreinheit erfassten Daten zur Bestimmung des Alterungszustands der Batterie umfassen von dem BMS bereitgestellte Statusinformationen der Batterie.

Gemäß einer Ausführungsform kann die Aufladevorrichtung als Onboard-Charger ausgebildet sein.

Die vorstehend genannte Aufgabe wird gemäß einem zweiten Aspekt der Erfindung durch ein Verfahren zum Betreiben einer Aufladevorrichtung zum Aufladen einer aufladbaren Batterie eines Flurförderzeugs gelöst. Das Verfahren umfasst:
mechanisches und elektrisches Verbinden einer Ladeschnittstelle, insbesondere eines Ladestecker, der Aufladevorrichtung mit einer entsprechenden Ladeschnittstelle des Flurförderzeugs, um während eines Ladevorgangs die Batterie des Flurförderzeugs mit einem Ladestrom und/oder einer Ladespannung zu beaufschlagen und somit die Batterie aufzuladen; und
Erfassen von Daten der Batterie des Flurförderzeugs während des Ladevorgangs mittels einer Sensoreinheit der Aufladevorrichtung, wobei auf der Grundlage der erfassten Daten ein Alterungszustand der Batterie des Flurförderzeugs bestimmbar ist.

Das Verfahren gemäß dem zweiten Aspekt der Erfindung kann mittels der Aufladevorrichtung gemäß dem ersten Aspekt der Erfindung durchgeführt werden. Daher ergeben sich weitere mögliche Ausführungsformen des Verfahrens gemäß dem zweiten Aspekt der Erfindung aus den vorstehend und nachstehend beschriebenen weiteren Ausführungsformen der Aufladevorrichtung gemäß dem ersten Aspekt der Erfindung.

Gemäß einem dritten Aspekt der Erfindung wird ein System zum Verwalten einer Vielzahl von elektrisch betriebenen Flurförderzeugen bereitgestellt, wobei das System eine Vielzahl von Aufladevorrichtungen gemäß dem ersten Aspekt der Erfindung zum Aufladen einer aufladbaren Batterie eines jeweiligen Flurförderzeugs umfasst sowie eine Managementvorrichtung zum Verwalten der Vielzahl von Aufladevorrichtung und/oder der Vielzahl von elektrisch betriebenen Flurförderzeugen. Dabei umfasst die Managementvorrichtung eine Kommunikationsschnittstelle, welche ausgebildet ist, von einer jeweiligen Aufladevorrichtung die von der Sensoreinheit während eines Ladevorgangs erfassten Daten der Batterie zu empfangen. Ferner umfasst die Managementvorrichtung einen Prozessor, welcher ausgebildet ist, auf der Grundlage der von der jeweiligen Aufladevorrichtung empfangenen Daten den Alterungszustand der Batterie zu bestimmen.

In einer Ausführungsform ist der Prozessor der Managementvorrichtung ausgebildet, den Alterungszustand der Batterie auf der Grundlage der von der Sensoreinheit während des Ladevorgangs erfassten Daten der Batterie mittels eines in der Managementvorrichtung hinterlegten formelmäßigen Zusammenhangs und/oder mittels eines von der Managementvorrichtung implementierten KI-Modells, insbesondere künstlichen neuronalen Netzwerkes zu bestimmen.

Gemäß einer Ausführungsform ist die Kommunikationsschnittstelle der Managementvorrichtung ferner ausgebildet, den von dem Prozessor bestimmten Alterungszustand der Batterie an die Vielzahl von Aufladevorrichtungen und/oder die Vielzahl von Batterien zu übermitteln. Hierdurch kann die Managementvorrichtung den Alterungszustand jeder Batterie der Vielzahl von Flurförderzeugen überwachen und beispielsweise mittels einer Anzeigeeinheit einem Benutzer anzeigen. Ferner kann die Managementvorrichtung ausgebildet sein, die Informationen über den Alterungszustand jeder Batterie der Vielzahl von Flurförderzeugen zur Bestimmung und Visualisierung weiterer Zustandsgrößen jeder Batterie zu verwenden, beispielsweise des SOC bzw. Ladezustands jeder Batterie.

In einer Ausführungsform ist die Managementvorrichtung ausgebildet, für die Vielzahl von Aufladevorrichtungen in Abhängigkeit eines vorherigen Alterungszustands einer jeweiligen Batterie einen Zeitpunkt und/oder eine Periodizität für die erneute Erfassung von Daten zur Bestimmung eines aktuellen Alterungszustands einer jeweiligen Batterie festzulegen.

Gemäß einer Ausführungsform ist die Managementvorrichtung ausgebildet, ein Lade- und/Energiemanagementsystem zu implementieren, welches ausgebildet ist, die Vielzahl von Aufladevorrichtungen zu steuern, den Aufladevorrichtungen eine jeweilige Ladeleistung zuzuweisen, welche von einer zur Verfügung stehenden Gesamtladeleistung und dem jeweiligen Alterungszustand einer mit einer Aufladevorrichtung verbundenen Batterie abhängt, und/oder die Managementvorrichtung ist ausgebildet, ein Flottenmanagementsystem zu implementieren, welches ausgebildet ist, jedem Flurförderzeug in Abhängigkeit des Alterungszustands der Batterie des jeweiligen Flurförderzeugs Transportaufträge zuzuweisen.

Weitere Vorteile und Einzelheiten der Erfindung werden beispielhaft anhand der in den schematischen Figuren dargestellten Ausführungsbeispiele näher erläutert. Hierbei zeigt:
Figur 1 eine schematische Darstellung eines erfindungsgemäßen Systems mit einer erfindungsgemäßen Aufladevorrichtung zum Aufladen der Antriebsbatterie eines Flurförderzeugs einer Vielzahl von Flurförderzeugen;
Figur 2 eine schematische Darstellung eines erfindungsgemäßen Systems mit einer Vielzahl von erfindungsgemäßen Aufladevorrichtungen in kommunikativer Verbindung mit einer erfindungsgemäßen Managementvorrichtung zum Verwalten der Vielzahl von Aufladevorrichtungen; und
Figur 3 ein Flussdiagramm, welches Schritte eines erfindungsgemäßen Verfahrens zum Betreiben einer erfindungsgemäßen Aufladevorrichtung zum Aufladen der Antriebsbatterie eines Flurförderzeugs illustriert.

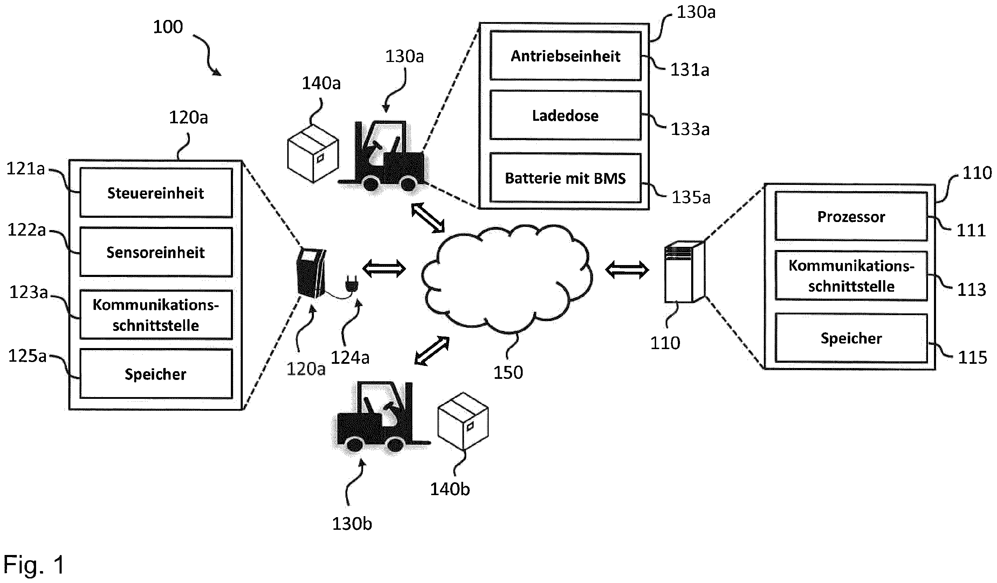

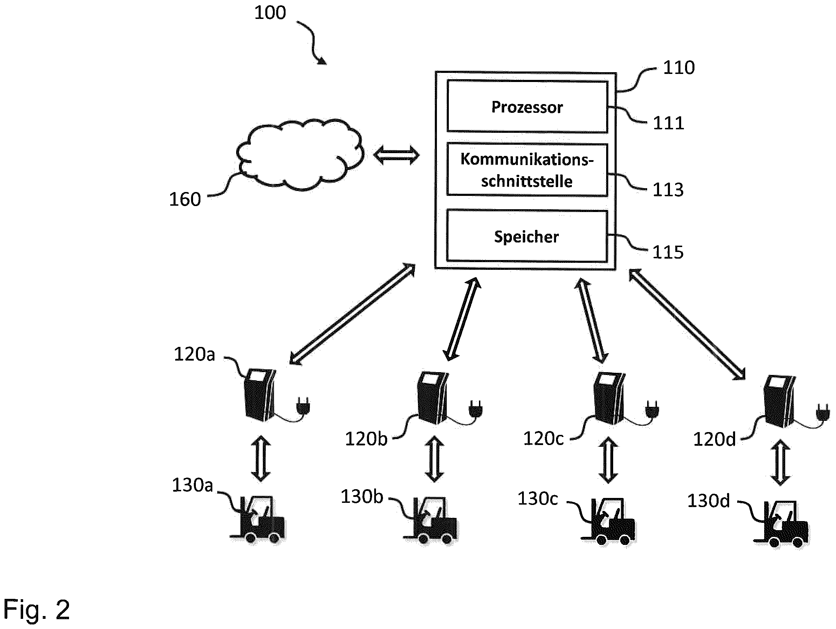

Figur 1 zeigt eine schematische Darstellung eines erfindungsgemäßen Systems 100 mit wenigstens einer erfindungsgemäßen Aufladevorrichtung 120a und einer Vielzahl von elektrisch betriebenen Flurförderzeugen 130a,b, insbesondere Gabelstaplern 130a,b zum Transport von Waren 140a,b, insbesondere Ladungsträgern 140a,b, beispielsweise Europaletten und/oder Gitterboxen. Bei der in Figur 1 dargestellten Ausführungsform umfasst das erfindungsgemäße System 100 ferner eine zentrale Managementvorrichtung 110, welche ausgebildet ist, die wenigstens eine Aufladevorrichtung 120a und/oder die Vielzahl von elektrisch betriebenen Gabelstaplern 130a,b zu verwalten, wie dies nachstehend im Zusammenhang mit Figur 2 detaillierter beschrieben wird. Das in Figur 1 dargestellten erfindungsgemäße System 100 kann beispielsweise in einem Warenlager implementiert sein. Die Aufladevorrichtung 120a kann als stationäre Ladestation 120a ausgebildet sein, welche mit einem Stromnetz verbunden ist und mit Wechselstrom und/oder Gleichstrom betrieben werden kann.

Wie in Figur 1 dargestellt, verfügt jedes der elektrisch betriebenen Flurförderzeuge 130a,b, insbesondere Gabelstapler 130a,b über eine elektrisch angetriebene Antriebseinheit 131a, beispielsweise einen Elektromotor 131a, um den jeweiligen Gabelstapler 130a,b bewegen zu können. Ferner umfasst jeder Gabelstapler 130a,b eine Antriebsbatterie 135a (auch als Traktionsbatterie 135a bekannt) zum Antreiben der Antriebseinheit 131a, wobei die Antriebsbatterie 135a neben der eigentlichen Batterie ein Batterie-Management-System umfassen kann, sowie eine Ladeschnittstelle 133a beispielsweise in Form einer Ladedose 133a. Die Vielzahl von Flurförderzeugen 130a,b, insbesondere Gabelstaplern 130a,b kann dazu ausgebildet sein, manuell, zumindest teilweise automatisiert oder vollautomatisiert betrieben zu werden. Bei einem vollautomatisierten Flurförderzeug 130a,b kann es sich um einen Transportroboter 130a,b, beispielsweise um einen Picker handeln. Bekanntermaßen kann ein Flurförderzeug 130a,b Lastaufnahmemittel, insbesondere Lastgabeln zum Transport der Ladungsträger aufweisen, die ebenfalls von der Antriebsbatterie 135a über die Antriebseinheit 131a angetrieben werden können. Bei der Antriebsbatterie 135a kann es sich um eine Bleibatterie, eine Lithiumbatterie oder um eine Batterie auf Basis einer anderer Zellchemie, wie beispielsweise eine Batterie auf der Basis von Natrium-Ionen handeln.

Bei der in Figur 1 dargestellten Ausführungsform umfasst die zentrale Managementvorrichtung 110, welche in Form eines Industrie-PCs 110 oder eines Cloud-Servers 110 ausgebildet sein kann, einen oder mehrere Prozessoren 111, eine Kommunikationsschnittstelle 113 und einen, insbesondere nichtflüchtigen, Speicher 115. Die Kommunikationsschnittelle 113 kann dazu ausgebildet sein, über drahtgebundene und/oder drahtlose Kommunikationsnetzwerke 150, beispielsweise ein 4G, 5G oder Wi-Fi-Kommunikationsnetzwerk 150, mit der wenigstens einen Aufladevorrichtung 120 und der Vielzahl von Flurförderzeugen 130a,b, insbesondere Gabelstaplern 130a,b zu kommunizieren. Im Falle einer stationären Aufladevorrichtung 120a kann die zentrale Managementvorrichtung 110 über eine Ethernet-Verbindung oder eine Kommunikationsbus-Verbindung, insbesondere einen CAN-Bus kommunikativ mit der Aufladevorrichtung 120a verbunden sein. Der Speicher 115 der Managementvorrichtung 110 kann ausgebildet sein, Daten und ausführbaren Programmcode zu speichern, der, wenn von dem Prozessor 111 der Managementvorrichtung 110 ausgeführt, den Prozessor 111 veranlasst, die im Folgenden beschriebenen Funktionen, Operationen und Verfahren der zentralen Managementvorrichtung 110 durchzuführen.

Die Aufladevorrichtung 120a (auch als Ladestation 120a bezeichnet) ist dazu ausgebildet, die sich im Betrieb entladende Batterie 135a eines jeweiligen Flurförderzeugs 130a,b, insbesondere Gabelstaplers 130a,b elektrisch aufzuladen. Hierzu umfasst die Aufladeeinrichtung 120a, wie in Figur 1 dargestellt, eine Ladeschnittstelle 124a in Form eines in Figur 1 schematisch dargestellten Ladesteckers 124a, welcher ausgebildet ist, mechanisch und elektrisch mit der komplementär ausgestalteten Ladedose 133a eines jeweiligen Flurförderzeugs 130a,b verbunden zu werden, indem der Ladestecker 124a in die Ladedose 133a eingesteckt wird. Ferner umfasst die Aufladevorrichtung 120a eine Steuereinheit 121a, welche ausgebildet ist (wenn der Ladestecker 124a in die Ladedose 133a eingesteckt ist), während eines Ladevorgangs die Batterie 135a eines jeweiligen Flurförderzeugs 130a,b mit einem Ladestrom und/oder einer Ladespannung zu beaufschlagen, um die Batterie des Flurförderzeugs 130a,b aufzuladen.

Die Aufladevorrichtung 120a kann ferner eine Kommunikationsschnittstelle 123a umfassen, welche über das Kommunikationsnetzwerk 150 für die bereits vorstehend beschriebene Kommunikation mit der zentralen Managementvorrichtung 110 und/oder eine Kommunikation mit den Flurförderzeugen 130a,b, insbesondere Gabelstaplern 130a,b ausgebildet ist. Wie in Figur 1 dargestellt, kann die Aufladevorrichtung 120a ferner einer Speicher 125a umfassen, welcher ausgebildet ist, Daten und ausführbaren Programmcode zu speichern, der, wenn von einem Prozessor der Aufladevorrichtung 120a ausgeführt, die Aufladevorrichtung 120a veranlasst, die im Folgenden beschriebenen Funktionen, Operationen und Verfahren durchzuführen.

Wie in Figur 1 dargestellt, umfasst die Aufladevorrichtung 120a erfindungsgemäß ferner eine Sensoreinheit bzw. Erfassungseinheit 122a, welche generell dazu ausgebildet ist, während des Ladevorgangs Daten der Batterie 135a zu erfassen und/oder zu bestimmen, auf deren Grundlage der Alterungszustand der Batterie 135a eines an die Aufladevorrichtung 120a angeschlossenen Flurförderzeugs 130a,b bestimmt werden kann. Wie dies nachstehend detaillierter beschrieben wird, können die von der Sensoreinheit 122a erfassten Daten der Batterie 135a beispielsweise Parameter der Batterie 135a und/oder Signale, insbesondere Zeitsignale und/oder Frequenzsignale von physikalischen Größen der Batterie 135a umfassen, insbesondere der Ladestrom, die Ladespannung und/oder die Impedanz der Batterie 135a. Ferner können die von der Sensoreinheit 122a erfassten Daten der Batterie 135a von dem BMS der Batterie 135a bereitgestellte Statusinformationen umfassen.

Gemäß einer Ausführungsform können die von dem BMS der Batterie 135a der Sensoreinheit 122a bereitgestellte Statusinformationen umfassen: Informationen über den Ladestrom, die Ladespannung, die Ladeleistung, einen Ladefüllstand der Batterie (SoC = State of Charge), eine Seriennummer, d.h. ID der Batterie 135a, eine Seriennummer des Flurförderzeugs 130a,b, mit dem die Aufladevorrichtung 120a zuletzt verbunden war oder verbunden ist, einen Ladestartzeitpunkt, einen Ladeendzeitpunkt, eine Gesamtladezeitdauer, eine verstrichene Ladezeitdauer, eine verbleibende Ladezeitdauer, eine zulässige Maximalladespannung und/oder eine zulässige Minimalladespannung, eine zulässige Maximalladeleistung und/oder eine zulässige Minimalladeleistung.

Gemäß einer Ausführungsform ist die Sensoreinheit 122a der Aufladevorrichtung 120a ferner ausgebildet, den Alterungszustand der Batterie 135a auf der Grundlage der während des Ladevorgangs erfassten Daten der Batterie 135a zu bestimmen. Bekanntermaßen stellt bei elektrisch betriebenen, d.h. mit einer Batterie betriebenen Fahrzeugen, wie den in Figur 1 dargestellten Flurförderzeugen, der Alterungszustand (auch als Gesundheitszustand oder im Englischen "State of Health, SoH" bekannt) einer Batterie ein Maß des Zustands der Batterie relativ zu einem ursprünglichen Zustand bzw. einem spezifikationsgemäßen Zustand dar, welcher beispielsweise eine minimale Nominalkapazität der Batterie definiert. In einer Ausführungsform kann der Alterungszustand der Batterie des Flurförderzeugs mit einem Prozentwert beispielsweise von 0% bis 100% angegeben werden, wobei ein Alterungszustand von 100% eine Batterie 135a unmittelbar nach der Herstellung bzw. eine spezifikationsgemäße Batterie 135a beschreibt und ein Alterungszustand von 0% eine nicht mehr funktionsfähige Batterie 135a beschreibt. Beispielsweise kann der Alterungszustand die vorhandene Rest-Kapazität der Batterie 135a bezogen auf deren ursprüngliche Nominalkapazität wiedergeben, wobei ein Alterungszustand von 100% bedeutet, dass die Batterie 135a bis zu deren Nominalkapazität aufladbar ist und diese elektrische Energie komplett auch wieder abgeben kann.

Wie dies dem Fachmann bekannt ist, gibt es bei elektrisch betriebenen Flurförderzeugen (anders als bei elektrisch betriebenen PKWs, d.h. Elektroautos) keine standardisierte Kommunikation zwischen der Aufladevorrichtung und der Batterie bzw. dem BMS der Batterie eines Flurförderzeugs, sondern die entsprechenden Protokolle für Flurförderzeuge sind in der Regel proprietäre Kommunikationsprotokolle. Entsprechend lassen sich die hier nachstehend im Detail beschriebenen erweiterten Funktionalitäten der Aufladevorrichtung 120a nahtlos in bestehende Kommunikationsprotokolle zwischen der Aufladevorrichtung 120a und der Batterie 135a bzw. dem BMS der Batterie 135a eines Flurförderzeugs 130 nahtlos einbinden, die es ermöglichen, dass während des Ladevorgangs zwischen der Sensoreinheit 122a und der Batterie 135a zusätzliche Sensor- und/oder Diagnosedaten für eine Ermittlung des Alterungszustands der Batterie 135a ausgetauscht werden können. Überdies werden bei herkömmlichen Aufladevorrichtungen keine hochpräzisen Strom- und/oder Spannungssensoren eingesetzt, welche daher keine genaue Signalabtastung ermöglichen. In einer Ausführungsform ist die Sensoreinheit 122a der Aufladevorrichtung 120a daher ausgebildet, die Sensordaten mit einer Quantisierung von wenigstens 16, vorzugsweise 24 Bits und/oder mit einer Signalabtastung im MHz-Bereich oder höher zu erfassen.

Gemäß einer Ausführungsform ist die Sensoreinheit 122a der Aufladevorrichtung 120a ausgebildet, den Alterungszustand der Batterie 135a auf der Grundlage eines in der Sensoreinheit 122a hinterlegten formelmäßigen Zusammenhangs zwischen den während des Ladevorgangs erfassten Daten der Batterie 135a und dem Alterungszustand der Batterie 135a zu bestimmen, wie dies nachstehend detaillierter beschrieben wird. In einer weiteren Ausführungsform kann die Sensoreinheit 122a der Aufladevorrichtung 120 ein Kl-Modell, insbesondere ein künstliches neuronales Netzwerk implementieren, welches ausgebildet ist, den Alterungszustand der Batterie 135a auf der Grundlage der während des Ladevorgangs erfassten Daten der Batterie 135a zu bestimmen. Ein solches Kl-Modell, insbesondere künstliches neuronales Netzwerk kann mittels Trainingsdaten von Batterien mit einem bekannten bzw. definierten Alterungszustand trainiert werden.

Alternativ oder zusätzlich kann die Aufladevorrichtung 120 ausgebildet sein, die von der Sensoreinheit 122a erfassten Daten an die zentrale Managementvorrichtung 110 weiterzuleiten, so dass die zentrale Managementvorrichtung auf der Grundlage der von der Sensoreinheit 122a erfassten Daten den Alterungszustand der Batterie 135a bestimmen kann. Gemäß einer Ausführungsform ist der Prozessor 111 der zentralen Managementvorrichtung 110 ausgebildet, den Alterungszustand der Batterie 135a auf der Grundlage eines in der Managementvorrichtung 110 hinterlegten formelmäßigen Zusammenhangs zwischen den während des Ladevorgangs erfassten Daten der Batterie 135a und dem Alterungszustand der Batterie 135a zu bestimmen. In einer weiteren Ausführungsform kann der Prozessor 111 der zentralen Managementvorrichtung 110 ein KI-Modell, insbesondere ein künstliches neuronales Netzwerk implementieren, welches ausgebildet ist, den Alterungszustand der Batterie 135a auf der Grundlage der während des Ladevorgangs von der Sensoreinheit 122a erfassten Daten der Batterie 135a zu bestimmen. Ein solches KI-Modell, insbesondere künstliches neuronales Netzwerk kann mittels Trainingsdaten von Batterien mit einem bekannten bzw. definierten Alterungszustand trainiert werden. Eine solche Ausgestaltung ist insbesondere dann vorteilhaft, wenn die zentrale Managementvorrichtung 110 beispielsweise als Cloud-Server 110 ausgebildet ist, welcher die Daten von einer Vielzahl von Aufladevorrichtungen 120a-d erhält, wie dies bei der in Figur 1 gezeigten Ausführungsform der Fall ist.

Gemäß einer Ausführungsform ist die Sensoreinheit 122a der Aufladevorrichtung 120a ausgebildet, die bei einem Ladevorgang in der Antriebsbatterie 135a gespeicherte elektrische Energie zu erfassen, beispielsweise durch eine Messung des Ladestroms und/oder der Ladespannung über den Zeitraum des Ladevorgangs, d.h. durch eine zeitliche Abtastung des Ladestroms und/oder der Ladespannung während des Ladevorgangs. Dabei startet vorzugsweise der Ladevorgang mit einem niedrigen Ladestand der Batterie 135a und es erfolgt ein Abgleich mit der ursprünglichen, d.h. spezifikationsgemäßen Kapazität der Batterie 135a. Gemäß einer weiteren Ausführungsform kann die Aufladevorrichtung 120a als bidirektionales Ladegerät ausgestaltet sein, welches zum Erfassen der Daten zur Bestimmung des Alterungszustands der Batterie 135a ausgebildet ist, die Batterie 135a zunächst vollständig zu entladen, um dann mittels der Sensoreinheit 122a die vollständige aktuelle Kapazität ab dem Ladezustand von 0% erfassen zu können. Bei einer solchen Ausführungsform kann ein formelmäßiger Zusammenhang in der Sensoreinheit 122a der Aufladevorrichtung 120a hinterlegt sein, auf dessen Grundlage die Sensoreinheit 122a den Alterungszustand der Batterie 135a als das Verhältnis der erfassten aktuellen Kapazität zu der spezifikationsgemäßen Kapazität bestimmen kann.

In einer weiteren Ausführungsform ist die Sensoreinheit 122a der Aufladevorrichtung 120a ausgebildet, eine transiente elektrische Impulsantwort oder Sprungantwort der mit der Aufladevorrichtung 120a verbundenen Antriebsbatterie 135a zu erfassen, um den Alterungszustand der Batterie 135a auf der Grundlage der erfassten Impulsantwort oder Sprungantwort zu bestimmen, wobei die Sensoreinheit 122a ausgebildet sein kann, die Impulsantwort und/oder Sprungantwort als Zeitsignal und/oder als Frequenzsignal zu erfassen. Um eine solche transiente elektrische Impulsantwort oder Sprungantwort der Batterie 135a anzuregen, kann gemäß einer Ausführungsform die Aufladevorrichtung 120a, insbesondere die Steuereinheit 121a (beispielsweise getriggert von der Sensoreinheit 122a) den Ladevorgang kurz verlangsamen oder ganz stoppen, d.h. den Ladestrom und/oder die Ladespannung auf einen geringeren Wert, insbesondere auf den Wert Null reduzieren, und dann wieder mit dem ursprünglichen Wert für den Ladestrom und/oder die Ladespannung fortführen. Diese sprunghafte kurze Reduzierung bzw. Abschaltung des Ladevorgangs durch die Steuereinheit 121a der Aufladevorrichtung 120a kann einmalig oder wiederholt erfolgen, beispielsweise einmal pro 1 oder 10 Minuten. Zum Erfassen der so erzeugten transienten Impulsantwort oder Sprungantwort der Batterie 135a kann die Sensoreinheit 122a über einen Zeitraum vor, während und/oder nach der Anregung den transienten Verlauf des Ladestroms, der Ladespanndung und/oder der Impedanz der Batterie 135a bestimmen. Bei einer Ausführungsform, bei welcher die Batterie 135a ein BMS umfasst, kann die Sensoreinheit 122a zusätzlich oder alternativ von dem BMS vor, während und/oder nach der Impulsanregung erfasste weitere Sensorwerte des BMS erhalten, um aus der transienten Sprungantwort bzw. Impulsantwort der Batterie 135a elektrische Parameter der Batterie 135a und somit den Alterungszustand der Batterie 135a bestimmen zu können. Beispielsweise kann die Sensoreinheit 122a ausgebildet sein, mit Hilfe von Korrelationsverfahren und/oder einer Fourier-Analyse aus den transienten Verläufen des Ladestroms und/oder der Ladespannung (sowie ggf. den weiteren Sensorwerten von dem BMS der Batterie 135a) den Verlauf der Impedanz der Batterie 135a und/oder deren elektrischen Parameter zu bestimmen bzw. identifizieren, um auf dieser Grundlage den Alterungszustand der Batterie 135a bestimmen zu können.

In einer Ausführungsform kann auf Grundlage der von der Sensoreinheit 122a erfassten Zeitsignale der Alterungszustand der Batterie 135a durch frequenzabhängige Ersatzschaltbildmodelle bestimmt werden.

Gemäß einer weiteren Ausführungsform ist die Aufladevorrichtung 120a, insbesondere die Steuereinheit 121a der Aufladevorrichtung 120a ausgebildet, eine transiente Impulsantwort oder Sprungantwort der Batterie 135a anzuregen, indem der Ladestrom und/oder die Ladespannung sprunghaft erhöht und wieder reduziert wird. Diese pulsartige Erhöhung des Ladestroms und/oder der Ladespannung kann einmalig oder wiederholend erfolgen, insbesondere in Form eines einzelnen oder einer Vielzahl von Impulsen, vorzugsweise Rechteckimpulsen. Gemäß einer Ausführungsform kann die Steuereinheit 121a der Aufladevorrichtung 120a bei einer Ausgestaltung beispielsweise des Ladestroms in Form von einem oder mehreren Rechteckimpulsen einen Offsetanteil (d.h. eine konstante Komponente des Ladestroms) verwenden, um somit einen Ladestrom in Form eines pulsierenden Gleichstroms zum Anregen eines transienten Verhaltens der Batterie 135a zu erzeugen. Beispielsweise kann die Sensoreinheit 122a ausgebildet sein, mit Hilfe von Korrelationsverfahren und/oder einer Fourier-Analyse aus den erfassten transienten Verläufen des Ladestroms und/oder der Ladespannung (sowie ggf. den weiteren Sensorwerten von dem BMS der Batterie 135a) den Verlauf der Impedanz der Batterie 135a und/oder deren elektrischen Parameter zu bestimmen bzw. identifizieren, um auf dieser Grundlage den Alterungszustand der Batterie 135a bestimmen zu können.

Gemäß einer weiteren Ausführungsform ist die Aufladevorrichtung 120a, insbesondere die Steuereinheit 121a der Aufladevorrichtung 120a ausgebildet, die mit der Aufladevorrichtung 120a verbundene Batterie 135a mit einer Ladespannung in Form einer Wechselspannung und/oder einer pulsierenden Gleichspannung mit unterschiedlichen Frequenzen anzuregen. Auch bei dieser Ausführungsform kann die Sensoreinheit 122a ausgebildet sein, mit Hilfe von Korrelationsverfahren und/oder einer Fourier-Analyse aus den erfassten transienten Verläufen des Ladestroms und/oder der Ladespannung (sowie ggf. den weiteren Sensorwerten von dem BMS der Batterie 135a) den Verlauf der Impedanz der Batterie 135a und/oder deren elektrischen Parameter insbesondere in Abhängigkeit der Frequenz zu bestimmen bzw. identifizieren, um auf dieser Grundlage den Alterungszustand der Batterie 135a bestimmen zu können. Bei dieser Ausführungsform kann die Sensoreinheit 122a den Alterungszustand der Batterie 135a beispielsweise auf der Grundlage des zeitlichen Verhaltens und/oder des Frequenzverhaltens der Impedanz der Batterie 135a bestimmen.

Figur 2 zeigt eine schematische Darstellung einer erfindungsgemäßen Variante des Systems 100 von Figur 1, bei welcher eine Vielzahl von erfindungsgemäßen Aufladevorrichtungen 120a-d zum Aufladen der Batterien einer Vielzahl von Flurförderzeugen 130a-d mit der Managementvorrichtung 110 in Verbindung stehen. Wie bereits vorstehend beschrieben, kann im Fall von stationären Aufladevorrichtungen 120a-d die Managementvorrichtung 110 insbesondere über eine Kommunikationsbus-Verbindung oder eine Ethernet-Verbindung mit den Aufladevorrichtungen 120a-d kommunizieren. Die Managementvorrichtung 110 kann, wie bereits vorstehend beschriebe, in Form eines lokalen Industrie-PCs 110 oder eines Cloud-Servers 110 ausgebildet sein oder mit einem solchen Server in der Cloud 160 in Kommunikation stehen.

Wie bereits vorstehend beschrieben, kann gemäß einer Ausführungsform die Aufladevorrichtung 120a ausgebildet sein, die von der Sensoreinheit 122a erfassten Daten an die zentrale Managementvorrichtung 110 weiterzuleiten, so dass die zentrale Managementvorrichtung 110 auf der Grundlage der von der Sensoreinheit 122a erfassten Daten den Alterungszustand der Batterie 135a bestimmen kann. Zur Bestimmung des Alterungszustand der Batterie 135a auf der Grundlage der von der Sensoreinheit 122a bereitgestellten Daten kann der Prozessor 111 der zentralen Managementvorrichtung 110 ausgebildet sein, die vorstehend im Zusammenhang mit der Sensoreinheit 122a beschriebenen Bestimmungsarten einzusetzen. Alternativ kann die zentrale Managementvorrichtung 110 direkt den von einer jeweiligen Aufladevorrichtung 120a-d bestimmten Alterungszustand einer jeweiligen Batterie 135a erhalten.

In einer Ausführungsform kann die Managementvorrichtung 110 neben den vorstehend beschriebenen Funktionalitäten ferner ein Lade- und/Energiemanagementsystem implementieren, Teil eines solchen Lade- und/oder Energiemanagementsystems sein und/oder mit einem solchen Lade- und/oder Energiemanagementsystem in Verbindung stehen, welches ausgebildet ist, die Vielzahl von Aufladevorrichtungen 120a-d zu steuern, insbesondere den Aufladevorrichtungen 120a-d eine jeweilige Ladeleistung zuzuweisen, welche von einer zur Verfügung stehenden Gesamtladeleistung und dem jeweiligen Alterungszustand einer mit einer Aufladevorrichtung 120a-d verbundenen Batterie 135a abhängen kann. Alternativ oder zusätzlich kann die Managementvorrichtung 110 ferner ein Flottenmanagementsystem implementieren, Teil eines solchen Flottenmanagementsystems sein und/oder mit einem solchen Flottenmanagementsystem in Verbindung stehen, welches ausgebildet ist, die Vielzahl von Flurförderzeugen 130a-d zu steuern, insbesondere jedem Flurförderzeug 130a-d Transportaufträge zuzuweisen, insbesondere in Abhängigkeit des Alterungszustands der Batterie 135a des jeweiligen Flurförderzeugs 130a-d. Beispielsweise kann die Managementvorrichtung 110 ausgebildet sein, einem Flurförderzeug 130a-d mit einer Batterie 135a mit einem Alterungszustand von 90% mehr Transportaufträge als einem Flurförderzeug 130a-d mit einer Batterie 135a mit einem Alterungszustand von 60% zuzuweisen. Wie bereits vorstehend beschrieben, kann die Managementvorrichtung 110 als ein Cloud-Server 110 ausgebildet sein, welcher die Daten aus einer Vielzahl von Warenlagern verarbeitet, in denen jeweils eine oder mehrere Aufladevorrichtungen 120a-d zum Aufladen der Batterien einer jeweiligen Vielzahl von Flurförderzeugen vorgesehen sind.

In einer Ausführungsform kann die Managementvorrichtung 110 ausgebildet sein, für die Vielzahl von Aufladevorrichtungen 120a-d einen Zeitpunkt und/oder eine Periodizität, d.h. Häufigkeit für die Erfassung von Daten zur Bestimmung des Alterungszustands einer jeweiligen Batterie 135a festzulegen. Beispielsweise kann die Managementvorrichtung 110 ausgebildet sein, die Periodizität, d.h. Häufigkeit der Erfassung von Daten zur Bestimmung des Alterungszustands für bereits stark beanspruchte Batterien erhöhen.

Gemäß einer Ausführungsform kann die zentrale Managementvorrichtung 110 den aktuellen Alterungszustand einer jeweiligen Batterie 135a zusammen mit einer ID der Batterie 135a und/oder einem aktuellen Zeitstempel an die Vielzahl von Aufladevorrichtungen 120a-d übertragen, so dass jede Aufladevorrichtung 120a-d jederzeit über den aktuellen Alterungszustand der Batterien der Vielzahl von Flurförderzeugen 130a-d informiert ist und dann bei einem neuen Ladevorgang von der entsprechenden Aufladevorrichtung 120a-d berücksichtigt werden kann.

Der Alterungszustand einer jeweiligen Batterie 135a kann, wie bereits vorstehend beschrieben, von der Managementvorrichtung 110 beispielsweise beim Energiemanagement berücksichtigt werden. Alternativ oder zusätzlich kann die Managementvorrichtung 110 ausgebildet sein, auf der Grundlage eines Vergleiches des erfassten Alterungszustand einer Batterie 135a mit einem Schwellenwert den Austausch der entsprechenden Batterie mit einer neuen Batterie zu veranlassen. Beispielsweise kann die Managementvorrichtung 110 ausgebildet sein, für Batterien mit einem erfassten Alterungszustand von kleiner als 30% einen Austausch der entsprechenden Batterie mit einer neuen Batterie veranlassen.

Gemäß einer weiteren Ausführungsform kann die Prozessoreinheit 111 der Managementvorrichtung 110 ausgebildet sein, die Daten und/oder die auf der Grundlage der Daten bestimmten Alterungszustände der Vielzahl von Batterien der Vielzahl von Flurförderzeugen 130a-d miteinander zu vergleichen. Anhand solcher Vergleiche kann die Managementvorrichtung 110 für die Vielzahl von Batterien der Vielzahl von Flurförderzeugen 130a-d den jeweiligen Alterungszustand beispielsweise mit der tatsächlich erbrachten Leistung einer Batterie (beispielsweise gemessen anhand der von dem entsprechenden Flurförderzeug 130a-d mit der Batterie gefahrenen Kilometer), um auf der Grundlage dieser Informationen für den jeweiligen Anwendungsfall beispielsweise den vorteilhaftesten Batterietyp bestimmen zu können.

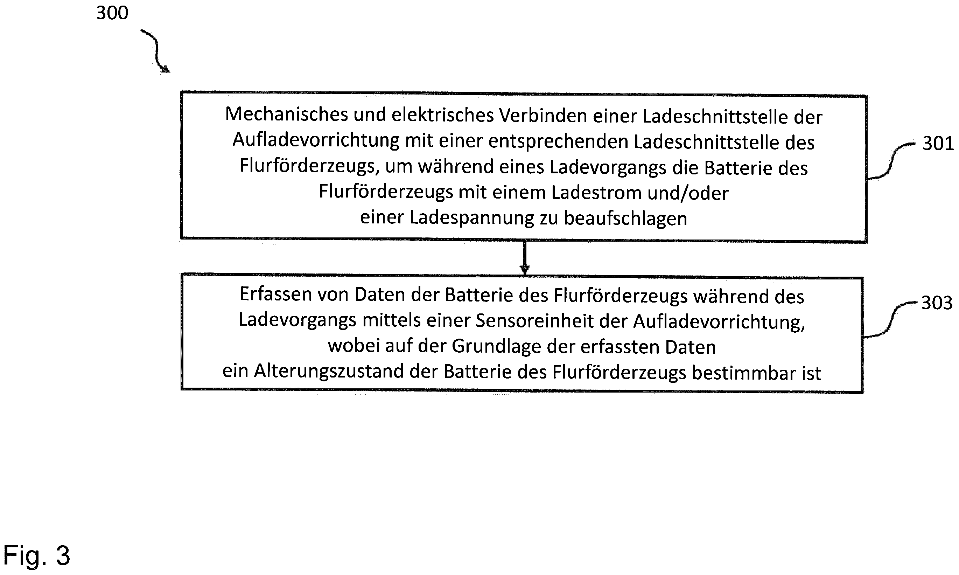

Figur 3 zeigt ein Flussdiagramm, welches Schritte eines erfindungsgemäßen Verfahrens 300 zum Betreiben einer erfindungsgemäßen Aufladevorrichtung 120a-d zum Aufladen der Antriebsbatterie 135a eines Flurförderzeugs 130a-d illustriert. Das Verfahren 300 umfasst einen Schritt 301 des mechanischen und elektrischen Verbindens der Ladeschnittstelle 124a, insbesondere des Ladesteckers 124a, der Aufladevorrichtung 120a-d mit einer entsprechenden Ladeschnittstelle 133a des Flurförderzeugs 130a-d, um während eines Ladevorgangs die Batterie 135a des Flurförderzeugs 130a-d mit einem Ladestrom und/oder einer Ladespannung zu beaufschlagen und die Batterie 135a aufzuladen. Ferner umfasst das Verfahren 300 einen Schritt 303 des Erfassens von Daten der Batterie 135a des Flurförderzeugs 130a-d während des Ladevorgangs mittels einer Sensoreinheit 122a der Aufladevorrichtung 120a-d, wobei auf der Grundlage der erfassten Daten ein Alterungszustand der Batterie 135a des Flurförderzeugs 130a-d bestimmbar ist.

Das Verfahren 300 kann mittels der vorstehend im Detail beschriebenen Aufladevorrichtung 120a-d durchgeführt werden. Daher ergeben sich weitere mögliche Ausführungsformen des Verfahrens 300 aus den vorstehend und nachstehend beschriebenen weiteren Ausführungsformen der Aufladevorrichtung 120a-d.

Aufgrund der Ausgestaltung der Aufladevorrichtung 120a mit der Sensoreinheit 122a gemäß der hierin beschriebenen Ausführungsformen kann die Aufladevorrichtung 120a zusätzliche Sensoren zur Strom- und Spannungsmessung verwenden und somit die von der BMS der Batterie 135a bereitgestellten Statusinformation ergänzen und validieren, um diese Daten für die Bestimmung des Alterungszustands zu verwenden. Gemäß hierin beschriebener Ausführungsformen wird keine zusätzliche Hardware benötigt, wodurch keine zusätzliche Hardware bei einem Kunden montiert werden muss. Ferner können gemäß hierin beschriebener Ausführungsformen während des Ladevorgangs für längere Zeiträume recht statische Ströme fließen, weshalb die Abtastung der Signale durch die Sensoreinheit 122a der Aufladevorrichtung 120a in diesem Zeitraum nicht so hoch sein muss, wie beispielsweise im Fahrbetrieb. Dadurch werden weniger Daten benötigt und die Berechnung kann auf leistungsschwächerer Hardware erfolgen. Ferner können gemäß hierin beschriebener Ausführungsformen Impulse zur Anregung der Batterie 135a gezielt und reproduzierbar einem üblichen Ladestrom bzw. einer üblichen Ladespannung aufgeprägt werden, wie beispielsweise definierte Sprünge bei definierten Ladeständen.

Dadurch kann nur bei Bedarf die Abtastung der Daten erhöht werden und der relevante Zeitraum der Sprungantwort der Batterie 135a kann gut aus den Messdaten isoliert werden. Außerdem können historische Batteriemessungen miteinander verglichen werden, wenn diese im gleichen Betriebszustand aufgezeichnet wurden. Gemäß hierin beschriebener Ausführungsformen kann während des Ladevorgangs die Aufladevorrichtung 120a zur SOH-Messung kurzzeitig die Ladeströme reduzieren, die Ladung kurzzeitig stoppen oder kurzzeitig eine Wechselspannung aufprägen, ohne dass es zu einer signifikanten Verlängerung des Ladevorgangs bzw. zu Ausfällen des Flurförderzeugs 130a-d kommt.

## Patentansprüche

1. Aufladevorrichtung (120a-d) zum Aufladen einer aufladbaren Batterie (135a) eines Flurförderzeugs (130a-d), wobei die Aufladevorrichtung (120a-d) umfasst:
eine Ladeschnittstelle (124a), insbesondere ein Ladestecker (124a), welche ausgebildet ist, mit einer entsprechenden Ladeschnittstelle (133a) des Flurförderzeugs (130a-d) mechanisch und elektrisch verbunden zu werden, um während eines Ladevorgangs die Batterie (135a) des Flurförderzeugs (130a-d) mit einem Ladestrom und/oder einer Ladespannung zu beaufschlagen; und
eine Sensoreinheit (122a), welche ausgebildet ist, während des Ladevorgangs Daten der Batterie (135a) des Flurförderzeugs (130a-d) zu erfassen, auf deren Grundlage ein Alterungszustand der Batterie (135a) des Flurförderzeugs (130a-d) bestimmbar ist.

2. Aufladevorrichtung (120a-d) nach Anspruch 1, wobei die Sensoreinheit (120a-d) ausgebildet ist, den Alterungszustand der Batterie (135a) auf der Grundlage der von der Sensoreinheit (122a) während des Ladevorgangs erfassten Daten der Batterie (135a) zu bestimmen.

3. Aufladevorrichtung (120a-d) nach Anspruch 2, wobei die Sensoreinheit (120a-d) ausgebildet ist, den Alterungszustand der Batterie (135a) auf der Grundlage der von der Sensoreinheit (122a) während des Ladevorgangs erfassten Daten der Batterie (135a) mittels eines in der Sensoreinheit (122a) hinterlegten formelmäßigen Zusammenhangs und/oder mittels eines von der Sensoreinheit (122a) implementierten Kl-Modells, insbesondere künstlichen neuronalen Netzwerkes zu bestimmen.

4. Aufladevorrichtung (120a-d) nach einem der vorhergehenden Ansprüche, wobei die Aufladevorrichtung (120a-d) eine Kommunikationsschnittstelle (123a) aufweist, welche ausgebildet ist, die von der Sensoreinheit (122a) während des Ladevorgangs erfassten Daten der Batterie (135a) an eine zentrale Managementvorrichtung (110) zum Bestimmen des Alterungszustand der Batterie (135a) zu senden und/oder den von der Sensoreinheit (122a) bestimmten Alterungszustand der Batterie (135a) an die zentrale Managementvorrichtung (110) zu senden.

5. Aufladevorrichtung (120a-d) nach einem der vorhergehenden Ansprüche, wobei die Aufladevorrichtung (120a-d) ferner eine Steuereinheit (121a) aufweist, welche ausgebildet ist, während des Ladevorgangs der Batterie (135a) den Ladestrom und/oder die Ladespannung so zu variieren, dass eine Impulsantwort und/oder Sprungantwort einer physikalischen Größe der Batterie (135a) angeregt wird, welche von der Sensoreinheit (122a) als die Daten der Batterie (135a) oder als Teil davon erfasst wird, auf deren Grundlage der Alterungszustand der Batterie (135a) bestimmbar ist.

6. Aufladevorrichtung (120a-d) nach Anspruch 5, wobei die Sensoreinheit (122a) ausgebildet ist, eine Impulsantwort und/oder Sprungantwort der Impedanz der Batterie als die Daten der Batterie (135a) oder als Teil davon zu erfassen, auf deren Grundlage der Alterungszustand der Batterie (135a) bestimmbar ist.

7. Aufladevorrichtung (120a-d) nach einem der vorhergehenden Ansprüche, wobei für die Erfassung der Daten der Batterie (135a) des Flurförderzeugs (130a-d) zur Bestimmung des Alterungszustand der Batterie (135a) die Aufladevorrichtung (120a-d) ausgebildet ist, die Batterie (135a) vor dem Ladevorgang zu entladen.

8. Aufladevorrichtung (120a-d) nach Anspruch 7, wobei die Sensoreinheit (120a-d) ausgebildet ist, den Alterungszustand der Batterie (135a) auf der Grundlage der von der Sensoreinheit (122a) während des Ladevorgangs erfassten Daten der Batterie (135a) zu bestimmen, indem das Verhältnis zwischen der auf die entladene Batterie (135a) geladene elektrische Gesamtenergie und einer spezifikationsgemäßen Energiekapazität der Batterie (135a) bestimmt wird.

9. Aufladevorrichtung (120a-d) nach einem der vorhergehenden Ansprüche, wobei die Batterie (135a) des Flurförderzeugs (130a-d) ein Batterie-Management-System, BMS, umfasst und wobei die von der Sensoreinheit (122a) erfassten Daten zur Bestimmung des Alterungszustands der Batterie (135a) von dem BMS bereitgestellte Statusinformationen der Batterie (135a) umfassen.

10. Aufladevorrichtung (120a-d) nach einem der vorhergehenden Ansprüche, wobei die Aufladevorrichtung (120a-d) als Onboard-Charger (120a-d) ausgebildet ist.

11. Verfahren (300) zum Betreiben einer Aufladevorrichtung (120a-d) zum Aufladen einer aufladbaren Batterie (135a) eines Flurförderzeugs (130a-d), wobei das Verfahren (300) umfasst:
mechanisches und elektrisches Verbinden (301) einer Ladeschnittstelle (124a), insbesondere eines Ladestecker (124a), der Aufladevorrichtung (120a-d) mit einer entsprechenden Ladeschnittstelle (133a) des Flurförderzeugs (130a-d), um während eines Ladevorgangs die Batterie (135a) des Flurförderzeugs (130a-d) mit einem Ladestrom und/oder einer Ladespannung zu beaufschlagen; und
Erfassen (303) von Daten der Batterie (135a) des Flurförderzeugs (130a-d) während des Ladevorgangs mittels einer Sensoreinheit (122a) der Aufladevorrichtung (120a-d), wobei auf der Grundlage der erfassten Daten ein Alterungszustand der Batterie (135a) des Flurförderzeugs (130a-d) bestimmbar ist.

12. System (100) zum Verwalten eine Vielzahl von elektrisch betriebenen Flurförderzeugen (130a-d), wobei das System (100) umfasst:
eine Vielzahl von Aufladevorrichtungen (120a-d) nach einem der Ansprüche 1 bis 9 zum Aufladen einer aufladbaren Batterie (135a) eines jeweiligen Flurförderzeugs (130a-d); und
eine Managementvorrichtung (110) zum Verwalten der Vielzahl von elektrisch betriebenen Flurförderzeugen (130a-d), wobei die Managementvorrichtung (110) umfasst:
eine Kommunikationsschnittstelle (113), welche ausgebildet ist, von einer jeweiligen Aufladevorrichtung (120a-d) die von der Sensoreinheit (122a) während eines Ladevorgangs erfassten Daten der Batterie (135a) zu empfangen; und
einen Prozessor (111), welcher ausgebildet ist, auf der Grundlage der von der jeweiligen Aufladevorrichtung (120a-d) empfangenen Daten den Alterungszustand der Batterie (135a) zu bestimmen.

13. System (100) nach Anspruch 12, wobei der Prozessor (111) ausgebildet ist, den Alterungszustand der Batterie (135a) auf der Grundlage der von der Sensoreinheit (122a) während des Ladevorgangs erfassten Daten der Batterie (135a) mittels eines in der Managementvorrichtung (110) hinterlegten formelmäßigen Zusammenhangs und/oder mittels eines von der Managementvorrichtung (110) implementierten KI-Modells, insbesondere künstlichen neuronalen Netzwerkes zu bestimmen.

14. System (100) nach Anspruch 12 oder 13, wobei die Kommunikationsschnittstelle (113) ferner ausgebildet ist, den von dem Prozessor (111) bestimmten Alterungszustand der Batterie (135a) an die Vielzahl von Aufladevorrichtungen (120a-d) zu übermitteln.

15. System (100) nach einem der Ansprüche 12 bis 14, wobei die Managementvorrichtung (110) ausgebildet ist, für die Vielzahl von Aufladevorrichtungen (120a-d) in Abhängigkeit eines vorherigen Alterungszustands einer jeweiligen Batterie (135a) einen Zeitpunkt und/oder eine Periodizität für die erneute Erfassung von Daten zur Bestimmung eines aktuellen Alterungszustands einer jeweiligen Batterie (135a) festzulegen.

16. System (100) nach einem der Ansprüche 12 bis 15, wobei die Managementvorrichtung (110) ausgebildet ist, ein Lade- und/Energiemanagementsystem zu implementieren, welches ausgebildet ist, die Vielzahl von Aufladevorrichtungen (120a-d) zu steuern, den Aufladevorrichtungen (120a-d) eine jeweilige Ladeleistung zuzuweisen, welche von einer zur Verfügung stehenden Gesamtladeleistung und dem jeweiligen Alterungszustand einer mit einer Aufladevorrichtung (120a-d) verbundenen Batterie (135a) abhängt, und/oder wobei die Managementvorrichtung (110) ausgebildet ist, ein Flottenmanagementsystem zu implementieren, welches ausgebildet ist, jedem Flurförderzeug (130a-d) in Abhängigkeit des Alterungszustands der Batterie (135a) des jeweiligen Flurförderzeugs (130a-d) Transportaufträge zuzuweisen.

17. System (100) nach einem der Ansprüche 12 bis 16, wobei die Managementvorrichtung (110) einen oder mehrere Cloud-Server (110) umfasst.
